# EUROPEAN PATENT SPECIFICATION

(11) **EP 2 156 069 B1**
(45) Date of publication and mention of the grant of the patent: **15.06.2016**
(21) Application number: 08825875.1
(22) Date of filing: 14.05.2008
(51) Int. Cl.: B60G 13/08, B60G 15/06, F16F 9/096

(54) **PRESSURE RESERVOIR FOR SHOCK ABSORBER**
DRUCKBEHÄLTER FÜR EINEN STOSSDÄMPFER
RÉSERVOIR DE PRESSION POUR AMORTISSEUR

(30) Priority: 16.05.2007 SE 0701175
(43) Date of publication of application: 24.02.2010
(73) Proprietor: ÖHLINS RACING AB, 194 27 Upplands Väsby (SE)
(72) Inventor: SINTORN, Torkel, S-185 91 Vaxholm (SE)
(74) Representative: Awapatent AB
(86) International application number: PCT/SE2008/050565
(87) International publication number: WO 2008/150218

(56) References cited:
- EP-A2- 0 184 698
- US-A- 4 271 869
- US-A- 4 311 302
- US-A- 6 105 740

## Description

### Technical field

The invention relates to a vessel or reservoir which is intended to pressurize a hydraulic shock absorber or a front fork on a two-wheeled or four-wheeled vehicle.

### Background of the invention

Hydraulic shock absorbers having an external reservoir fixedly secured to a cylinder head connected to the shock absorber body, a so-called "piggyback solution", have long been known. The external reservoir is intended to both pressurize the damping medium in the shock absorber, so that a certain excess pressure prevails and cavitation can be avoided. In addition, the pressurizing reservoir can absorb the piston rod displacement or the damping medium increase which occurs when the temperature of the damping medium increases. The pressurizing vessel is pressurized by a compressible medium, preferably gas in some form, which is more compressible than the damping medium, preferably oil with various additives, which is used to absorb force. The pressurizing medium acts upon a member having a certain active area upon which the increasing or decreasing damping medium volume also acts. The member therefore moves in dependence on the damping medium volume acting upon it.

In patent US 4271869, a shock absorber having an external reservoir is described, in which the member which separates the compressible medium from the damping medium is an elastic rubber part, a so-called bladder.

The Applicant's own patent EP 1006292 shows a shock absorber having an external pressurizing reservoir, in which the separating member has the form of a circular piston, which is intended to slide against the inner surface of the reservoir.

As the vehicles become more and more advanced, the space in which the shock absorbers are to be fitted diminishes. It has therefore proved to be a problem to accommodate a vehicle shock absorber with external reservoir in the diminishing space between the chassis/body and the ground. Previous solutions to the problem are to angle the reservoir in relation to the damping body, see, for example, US 6220408, or, in relation to the damping body, to turn the cylinder head to which the reservoir is fastened, see, for example, US 6105740. Another solution is to separate the reservoir from the damping body and connect the parts with a hose, see US 2003137122. The reservoir can then be placed where space is present. The length of the hoses means, however, that there are delays in the system and cavitation can occur more easily.

It can also be a problem to cool both the damping medium and the gas volume when the pressure reservoir has a circular cross section and thus a relatively small area against the cooling external air. When the shock absorber is subjected to strong forces or high speeds for a lengthy period, the temperature of both the damping medium and the gas increases, which leads to an increase in pressure in the damping body and in the external reservoir. The temperature increase in the gas occurs, however, more slowly than the temperature increase in the damping medium. By virtue of the fact the interior of the shock absorber is initially pressurized with a certain gas pressure and that the gas is more compressible than the damping medium, the partition wall between damping medium and gas is moved, so that the volume increase in the damping medium is absorbed by the volume decrease which then takes place in the gas. But since also the volume of the gas is changed in the event of a change in temperature, the total pressure in the shock absorber increases and an increased pressure can result in a change to the damping characteristics of the shock absorber. A good and rapid cooling of the damping medium is therefore necessary to prevent a volume increase in the gas. In patent WO 0071898, the problem of the increased gas pressure has been solved by the opening of a passage from the gas chamber, which releases the excess pressure. The result is, however, that the gas volume becomes too small when the temperature of the gas falls.

If an elastic rubber part is used as the pressurizing member, the pressurizing area is greater than if a floating piston is used. This also means that the heat exchange between damping medium and gas increases. At the same time, the rubber part better fills the reservoir and the oil volume against which the area of the part acts is smaller and is extended over a larger cooling outer surface than the oil volume in a reservoir with piston. It has been shown, however, that the fact that the cooling area has a circular profile is not sufficient to optimally cool the damping medium and the gas.

US 4 311 302 A discloses a shock absorber device wherein a piston rod unit is axially displaceable through a cylindrical member from one end toward the other end thereof. The cylindrical member forms a variable volume working chamber containing a first fluid. A spring chamber is in communication with the working chamber so that the first fluid can flow between the two chambers. A pressurized second fiuid is contained within the spring chamber separate from the first fluid and it acts on the first fluid for biasing the piston rod unit out of the working chamber.

EP 0 184 698 A2 discloses a hydraulic damper comprising an inner tube and an outer tube surrounding the latter and a piston, arranged such that it can move in the inner tube and connected to a piston rod. The inner space of the inner tube and a part of the outer space formed between the outer tube and the inner tube are filled with damping fluid and the rest of the outer space is filled with gas, the inner space and the outer space being connected to each other by a channel.

### Object of the invention

The object of the present invention is to provide a space-efficient shock absorber with external pressurizing reservoir.
The invention further aims to solve this problem in a way which gives a better and smoother working of the shock absorber by hallowing a faster fall in temperature of the damping medium and the gas.

### Summary of the invention

The invention relates to a reservoir comprising an upper and a lower reservoir part divided by a member into a first and second reservoir chamber. The reservoir is intended to be joined together with and pressurize a hydraulic shock absorber. The hydraulic shock absorber comprises a substantially cylindrical shock absorber body consisting of a damping cylinder having an inner damping chamber filled with a damping medium. The damping cylinder is delimited at both its ends by fastening members and is divided by an axially movable main piston. The reservoir is fixed to one of the fastening members. At least the lower reservoir part is delimited by two parallel-displaced flat base surfaces and has a reservoir wall as a contacting surface between these base surfaces. The reservoir also has a vertical extent which is substantially parallel with the shock absorber body. The invention is characterized in that that one of or both of the base surfaces of the lower reservoir are kidney-shaped and are connected by the reservoir wall so that the lower part of the reservoir has a vertical extent which partially follows the cylindrical shape of the shock absorber body. This design produces a compact shock absorber construction and a reservoir which has a greater heat exchange with the environment, so that the temperature of the damping medium can be lowered.

The shape of the reservoir can also be described by stating that that reservoir wall of the lower reservoir part which faces toward the shock absorber body has an inner surface which substantially follows the cylindrical shape of the shock absorber body. That part of the reservoir wall of the lower reservoir part which faces away from the shock absorber body has an outer surface arranged at a greater radial distance from the shock absorber body than the inner surface. Between the inner and the outer surface a space is therefore formed, which creates the desirable reservoir chamber. Since the outer surface is larger, a larger cooling area is created for the damping medium present in the reservoir.

In order to create a simple and durable construction, the outer and the inner surface have a smooth transition to one another, which is connected to a radius.

In a first embodiment of the invention, the upper reservoir part connects to the lower reservoir part and together forms a unit which, at its upper end, is connected to the cylinder head. In said first embodiment, the upper and the lower reservoir part are produced from one material piece and, in a second embodiment, the upper and the lower reservoir part are produced as two separable units.

In a third embodiment, the inner surface of the lower reservoir part is arranged at a distance from the shock absorber body. This distance is adapted to the dimensions of the spring of the shock absorber and it also has a tolerance which allows a certain movement and full compression of the spring.

In a preferred embodiment, the reservoir is divided by an elastic member into a first and a second reservoir chamber in which the first reservoir chamber is hydraulically connected to the damping-medium-filled damping chamber and the second reservoir chamber is filled by a gas. The gas acts upon the inner surface of the elastic member and pressurizes the first reservoir chamber. Since the member is elastic, the oil displacement which is created when the piston rod is pressed into the damping chamber can also be taken up by the damping reservoir. The increase in damping medium volume which is formed when the oil is expanded at high temperature can also be taken up by the damping reservoir.

Preferably, the lower cross section of the elastic member is shaped according to the base surface of the lower reservoir part, so that it, too, is kidney-shaped. The elastic member is fixed in the lower part of the reservoir by a cap secured in the reservoir by a locking ring, which engages in a groove in the reservoir or in the cap. The inner oil-filled volume of the reservoir is sealed against the environment by the lower part of the elastic member, which thus is also used as a seal between the cap and the inner surface of the reservoir.

The invention is described in greater detail below, with references to the accompanying drawings.

### List of figures

Fig. 1 shows a hydraulic shock absorber having an external reservoir.
Fig. 2 shows a bottom view of the reservoir fixed to the shock absorber.
Fig. 3 shows a sectional view of a hydraulic shock absorber having a reservoir according to the basic concept of the invention.
Fig. 4a shows a front view of a first embodiment of the reservoir.
Fig. 4b shows a view of a vertical section through the centre of the reservoir and the elastic member.
Fig. 4c shows a top view of the reservoir.
Fig. 5 shows an alternative fastening of the reservoir to the cylinder head.
Fig. 6 shows a front view of a second embodiment of the reservoir.

### Detailed description of the invention

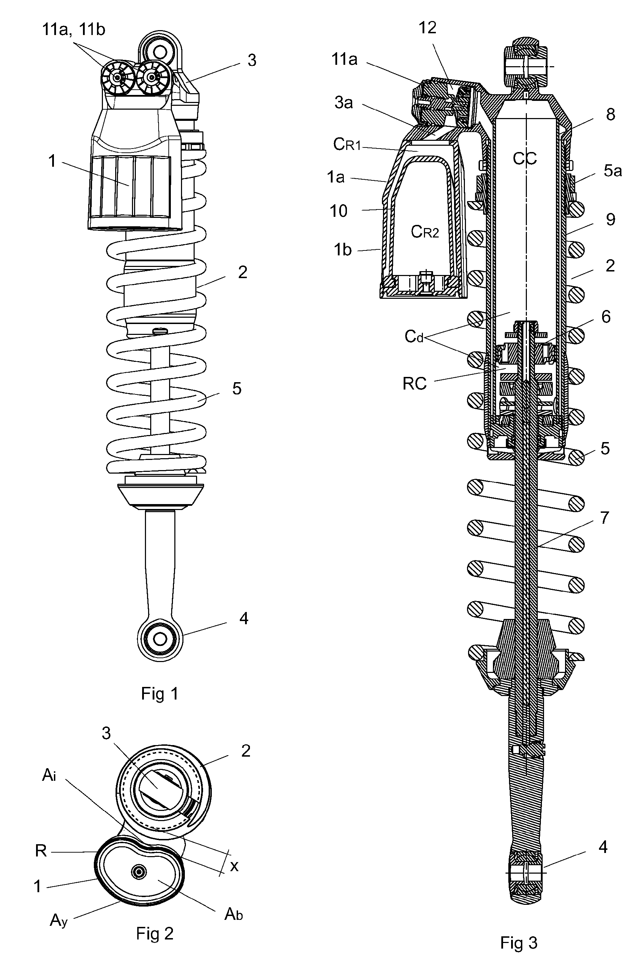

Figure 1 shows a hydraulic shock absorber having an external reservoir 1 according to the invention. The shock absorber is made up of a damping body 2 having an outer diameter d_{2y}, which is intended, with an upper fastening member or cylinder head 3, to be fastened in a vehicle chassis (not shown), for example a motor cycle, car or other vehicle and, with a lower fastening member 4, to be fastened in a wheel, a ski or a runner (not shown). The external reservoir 1 has a vertical extent and extends along and is arranged substantially parallel with the shock absorber body 2 with a certain distance x between the two parts 1, 2. The reservoir 1 can be divided into an upper 1 a and a lower reservoir part 1 b. These parts can be arranged as a unit produced from one material piece or as two separable units. The second reservoir part 1 b has the form of a kidney-shaped cylinder. A cylinder has an inner volume which is delimited by two paralleldisplaced flat base surfaces and a contacting surface which joins together the base surfaces. The contacting surface is constituted in this case by a reservoir wall, so that a reservoir chamber C_{R} is formed. The upper reservoir part 1 a connects the lower reservoir part 1 b to the upper fastening member 3 of the shock absorber, but can also, in another embodiment, be connected to the lower fastening member 4.

Figure 2 shows a bottom view of the reservoir and its base surfaces A_{b} when it is secured in the shock absorber. The base surfaces A_{b} of the lower reservoir part 1 b are kidney-shaped. This means that the inner part of the reservoir wall of the lower reservoir part 1 b, i.e. the surface facing toward the shock absorber body 2, is a, in relation to the centre line of the reservoir, concave surface Aᵢ, which substantially follows the cylindrical shape of the shock absorber body 2. The surface therefore curves only in one direction. The outer part of the reservoir wall of the lower reservoir part 1 b, i.e. the surface facing away from the shock absorber body 2, is a convex outer surface Ay, having a larger area than the inner surface Aᵢ. The outer surface Ay is also arranged at a greater distance from the shock absorber body 2 than the inner surface Aᵢ. In order to create the kidney shape of the base surfaces A_{b} of the reservoir, the outer and the inner surface A_{y}, Aᵢ have a smooth transition to one another, i.e. they are connected to a radius R determined by the radial distance between the inner and the outer contacting surface.

The inner surface Aᵢ substantially follows the cylindrical shape of the damping body 2 at a radial distance x from the outer diameter d_{2y} of the damping body and this distance is substantially constant over the whole of the inner surface Aᵢ. The distance can vary, but in the first embodiment of the invention it must be of such a size that a helical spring 5 can be introduced between the damping body 2 and the reservoir 1. The helical spring must also be able to be compressed without risk of becoming jammed between the parts. Preferably, the distance x is between 10 and 20 mm. The distance is adapted to the spring dimensions by variation of the construction of the upper fastening device 3.

Figure 3 shows the hydraulic shock absorber having the external reservoir 1 in cross section. The shock absorber is made up of a cylindrical shock absorber body 2 comprising a damping cylinder 8 which delimits an inner damping-medium-filled damping chamber C_{d} and comprises a main piston 6 fixed to a piston rod 7. The main piston 6 is arranged to slide axially in the damping cylinder 8 when the shock absorber is subjected to an external force, so that the main piston 6 moves in relation to the shock absorber body 2. The damping cylinder 8 is delimited by the main piston 6 in a first compression damping chamber CC and a second return damping chamber RC. The main piston 6 can comprise passages which admit a limited damping medium flow, or can be solid so that the damping medium flow is forced between the damping chambers via one or more external ducts. Around the damping cylinder 8 is arranged, in this embodiment, an outer tube 9, which is delimited at its upper end by the upper fastening device or the cylinder head 3. Between the outer tube 9 and the damping cylinder 8 a space is formed, in which damping medium can flow between the damping chambers, so that this space can be said to constitute the abovementioned external ducts.

Around the shock absorber body 2 there is also placed the spring 5. The spring 5 is in this case a helical spring, which is clamped between the lower fastening member 4 and a spring washer 5a which is threaded on the outer tube 9.

In a further embodiment (not shown), the helical spring has been replaced by a pneumatic spring, which is provided in a space between the outer tube 9 or the damping tube 8 and a further tube arranged concentrically outside this. The size of this space preferably substantially coincides with the space for the helical spring, i.e. the distance x between the outer tube 9 and the inner surface Aᵢ of the reservoir.

An elastic member 10 divides the interior of the reservoir 1 into an oil-filled first reservoir chamber C_{R1} and a gas-filled second reservoir chamber C_{R2}. The gas in the elastic member 10, which delimits the second reservoir chamber C_{R2}, pressurizes the oil-filled first reservoir chamber C_{R1} with a certain basic pressure. The first reservoir chamber C_{R1} is common to both damping chambers CC, RC. Between the first reservoir chamber C_{R1} and the respective damping chamber CC, RC, two separate adjustable valves 11a, 11b (see also fig. 1) are arranged to generate damping force through restriction of a damping medium flow between the damping chambers CC, RC when the shock absorber is subjected to a compression and a return stroke respectively, which lead to the main piston 6 acquiring a certain speed.

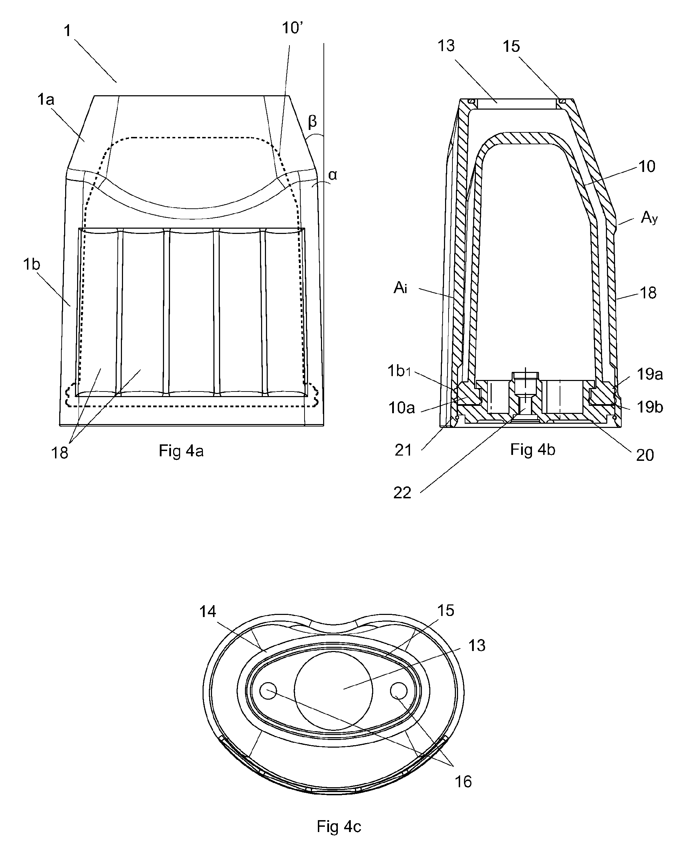

A duct 3a in the cylinder head connects the oil-filled first reservoir chamber C_{R1} in the reservoir 1 to a space 12 common to both valves. The duct opens out into the reservoir 1 through a hole 13 made in the latter, see fig. 4a-c.

Figures 4a-4c show various views of the reservoir 1. In this embodiment, the reservoir 1 is produced from a single basic material by water driving, casting, extrusion or the like.

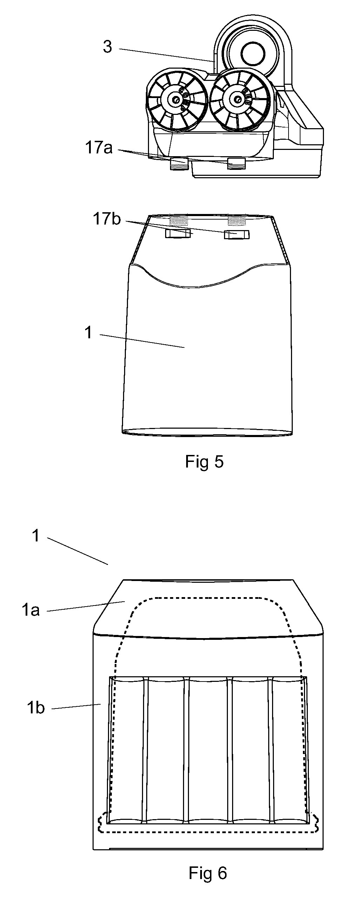

Figure 4a shows a first embodiment, in which the outer, vertically extending surface of the reservoir body is angled at an angle α in relation to the perpendicular plane. This angle α is intended to adapt the reservoir 1 to the rounded upper shape of the elastic member 10, in figure 3a shown with a dashed line 10', so that as small a damping medium volume as possible is disposed in the space between the elastic member 10 and the reservoir 1. An angle β greater than α closes off the upper part of the reservoir, which connects to the cylinder head 3 via an elliptical connection 14, see also fig. 4c. In this elliptical connection 14 is arranged a groove 15, which is intended for a seal which will seal against the cylinder head 3. Two or more screw holes 16 are arranged on either side of the hole 13 connecting the inner damping medium volume of the reservoir to the damping medium volume of the respective damping chamber. In these screw holes 13, a screw joint is fitted, which binds together the reservoir and the cylinder head. An alternative embodiment for binding together the reservoir and the cylinder head is shown in figure 5, in which the cylinder head 3 is provided with threaded pins 17a, which are intended to cooperate with nuts 17b arranged in the interior of the reservoir. There are also other possible connection methods, for example press-fitting or riveting.

In order to lighten the reservoir, grooves 18 are milled in the outer surface Ay of the reservoir wall. By virtue of the fact that the outer surface Ay is larger than the inner surface Aᵢ, there is a greater part of pressure-absorbing material on the outer side of the reservoir. The depth of the grooves is therefore adapted such that an approximately equal-sized total volume of pressure-absorbing material is kept on the outer surface as is the total volume on the inner surface.

Figure 4b also shows the elastic member 10 and its fastening in the reservoir 1. The elastic member has a shape which extends from a base surface/lower part 10a, this being kidney-shaped and adapted to the base surface A_{b} of the reservoir, and which is tailored to follow the inner shape of the outer walls of the reservoir. The member 10 is preferably made of oil-resistant rubber, which can be die-cast or otherwise given the desired shape.

The elastic member 10 is fixed in the end part 1b₁ of the reservoir by a cap 20 secured in the lower reservoir part 1b by a locking ring 21, which engages in a groove in the inner surface of the reservoir 1 or in the cap 20. The inner oil-filled first reservoir chamber C_{R1} of the reservoir 1 is sealed against the environment by the lower part 10a of the elastic member, which is thus also used as a seal between the cap 20 and the inner surface of the reservoir. That part of the member 10 which seals against the inner wall of the reservoir is configured with two raised edges 19a, 19b, which act as two mutually separated seals which prevent oil leakage. An advantageous pretensioning of the sealing edges 19a, 19b against the inner wall is created by tailoring the outer diameter of the cap 20 to the inner diameter of the reservoir. The inner volume of the elastic member 10 is filled with a gas, preferably nitrogen, via a hole 22 in the cap. The hole 22 is sealed against the environment via a screw and an air-tight material according to the prior art.

In a second embodiment of the reservoir 1 according to the invention, which is shown in figure 6, it is extruded from a material so that the reservoir has mutually parallel sides. The upper reservoir part 1a has the form of a separate cap 23, which is sealed against and fastened to the lower reservoir part 1 b either with press-fitting or with a threaded or bolted joint. Extending through this cap 23 is the hole connecting the reservoir and the respective damping chamber. The lower reservoir part 1 a can also be fixed directly in the cylinder head 3, without the intermediate cap, through mutual matching of the bearing surfaces of the parts.

The invention is not limited to the embodiment shown above by way of example, but can be modified within the scope of the following patent claims.

## Claims

1. A reservoir (1) comprising an upper and a lower reservoir part (1 a, 1 b) divided by a member (10) into a first and second reservoir chamber (CRI , CR2), which reservoir is intended to be joined together with and pressurize a hydraulic shock absorber comprising a substantially cylindrical shock absorber body (2) comprising a damping cylinder (8) having an inner damping chamber (Cd) filled with a damping medium, the damping chamber being delimited at both its ends by fastening members (3, 4) and divided by an axially movable main piston (6), wherein the reservoir (1) is fixed to one of the fastening members (3, 4), wherein the lower reservoir part (1b) is delimited by two parallel-displaced flat base surfaces (Ab) and a reservoir wall as a contacting surface between these base surfaces and has a vertical extent which is substantially parallel with the shock absorber body (2), **characterized in that** one of or both of the base surfaces (Ab) of the lower reservoir part (1 b) are kidney-shaped and are connected by the reservoir wall so that the lower reservoir part (1 b) has a vertical extent which partially follows the cylindrical shape of the shock absorber body (2), wherein that part of the reservoir wall of the lower part (1 a) of the reservoir which faces toward the shock absorber body (2) has an inner surface (Ai) which substantially follows the cylindrical shape of the shock absorber body (2) and that part of the reservoir wall of the lower part (1 a) of the reservoir which faces away from the shock absorber body (2) is an outer surface (Ay) which is arranged at a greater radial distance from the shock absorber body (2) than the inner surface (A), wherein the inner surface (A) of the lower reservoir part (1 a, 1 b) is arranged at a distance (x) from the shock absorber body (2).

2. The reservoir as claimed in claim 1, **characterized in that** the outer and the inner surface (Aj, Ay) have a smooth transition to one another, connected to a radius (R).

3. The reservoir as claimed in claim 1 or 2, **characterized in that** the upper reservoir part (1 a) connects to the lower reservoir part (1 b) and together forms a unit which, at its upper end, is connected to the cylinder head.

4. The reservoir as claimed in claim 3, **characterized in that** the upper and the lower reservoir part (1a, 1b) are produced from one material piece.

5. The reservoir as claimed in claim 3, **characterized in that** the upper and the lower reservoir part (1a, 1b) are produced as two separable units.

6. The reservoir as claimed in any one of the above claims, **characterized in that** the reservoir (1) is divided by an elastic member (10) into a first (CR1) and a second reservoir chamber (CR2) in which the first reservoir chamber (CRI) is hydraulically connected to the damping-medium- filled damping chamber (Cd) and the second reservoir chamber (CR2) is filled by a gas which acts upon the inner surface of the elastic member (10) and pressurizes the first reservoir chamber (CRI).

7. The reservoir as claimed in claim 6, **characterized in that** the lower cross section of the elastic member (10) is shaped according to the base surface (Ab) of the lower reservoir part (1 b), so that it, too, is kidney-shaped.

8. The reservoir as claimed in claim 6, **characterized in that** the elastic member (10) is fixed in the lower part of the reservoir by a cap (21) secured in the reservoir (1).

9. The reservoir as claimed in claim 6, **characterized in that** the damping-medium-filled first reservoir chamber (CRI) of the reservoir is sealed against the environment by the lower part (10a) of the elastic member (10).

## Patentansprüche

1. Behälter (1), welcher einen oberen und einen unteren Behälterteil (1a, 1b) umfasst und durch ein Element (10) in eine erste und eine zweite Behälterkammer (CR1, CR2) aufgeteilt ist, wobei der Behälter dazu bestimmt ist, mit einem hydraulischen Stoßdämpfer verbunden zu werden und diesen mit Druck zu beaufschlagen, der einen im Wesentlichen zylindrischen Stoßdämpferkörper (2) umfasst, der einen Dämpfungszylinder (8) mit einer mit einem Dämpfungsmedium gefüllten inneren Dämpfungskammer (Cd) umfasst, wobei die Dämpfungskammer an ihren beiden Enden von Befestigungselementen (3, 4) begrenzt wird und durch einen axial beweglichen Hauptkolben (6) geteilt wird, wobei der Behälter (1) an einem der Befestigungselemente (3, 4) befestigt ist, wobei der untere Behälterteil (1b) von zwei parallel zueinander verschobenen ebenen Grundflächen (Ab) und einer Behälterwand als einer Kontaktfläche zwischen diesen Grundflächen begrenzt wird und eine vertikale Erstreckung aufweist, welche im Wesentlichen parallel zu dem Stoßdämpferkörper (2) ist,
**dadurch gekennzeichnet, dass** eine dieser Grundflächen (Ab) des unteren Behälterteils (1b) oder beide nierenförmig sind und durch die Behälterwand verbunden sind, so dass der untere Behälterteil (1b) eine vertikale Erstreckung aufweist, welche teilweise der zylindrischen Form des Stoßdämpferkörpers (2) folgt, wobei derjenige Teil der Behälterwand des unteren Teils (1 a) des Behälters, welcher dem Stoßdämpferkörper (2) zugewandt ist, eine innere Fläche (Ai) aufweist, welche im Wesentlichen der zylindrischen Form des Stoßdämpferkörpers (2) folgt, und derjenige Teil der Behälterwand des unteren Teils (1 a) des Behälters, welcher von dem Stoßdämpferkörper (2) abgewandt ist, eine äußere Fläche (Ay) ist, welche in einem größeren radialen Abstand von dem Stoßdämpferkörper (2) als die innere Fläche (A) angeordnet ist, wobei die innere Fläche (A) des unteren Behälterteils (1 a, 1 b) in einem Abstand (x) von dem Stoßdämpferkörper (2) angeordnet ist.

2. Behälter nach Anspruch 1, **dadurch gekennzeichnet, dass** die äußere und die innere Fläche (Ai, Ay) einen glatten Übergang ineinander aufweisen, der mit einem Radius (R) verbunden ist.

3. Behälter nach Anspruch 1 oder 2, **dadurch gekennzeichnet, dass** der obere Behälterteil (1 a) mit dem unteren Behälterteil (1 b) verbunden ist und mit ihm zusammen eine Einheit bildet, welche an ihrem oberen Ende mit dem Zylinderkopf verbunden ist.

4. Behälter nach Anspruch 3, **dadurch gekennzeichnet, dass** der obere und der untere Behälterteil (1a, 1b) aus einem einzigen Materialstück hergestellt sind.

5. Behälter nach Anspruch 3, **dadurch gekennzeichnet, dass** der obere und der untere Behälterteil (1a, 1b) als zwei trennbare Einheiten hergestellt sind.

6. Behälter nach einem der obigen Ansprüche, **dadurch gekennzeichnet, dass** der Behälter (1) durch ein elastisches Element (10) in eine erste (CR1) und eine zweite Behälterkammer (CR2) aufgeteilt ist, wobei die erste Behälterkammer (CR1) hydraulisch mit der mit Dämpfungsmedium gefüllten Kammer (Cd) verbunden ist und die zweite Behälterkammer (CR2) mit einem Gas gefüllt ist, welches auf die innere Fläche des elastischen Elements (10) einwirkt und die erste Behälterkammer (CR1) mit Druck beaufschlagt.

7. Behälter nach Anspruch 6, **dadurch gekennzeichnet, dass** der untere Querschnitt des elastischen Elements (10) entsprechend der Grundfläche (Ab) des unteren Behälterteils (1b) geformt ist, so dass er ebenfalls nierenförmig ist.

8. Behälter nach Anspruch 6, **dadurch gekennzeichnet, dass** das elastische Element (10) in dem unteren Teil des Behälters durch eine Kappe (21) fixiert ist, die in dem Behälter (1) befestigt ist.

9. Behälter nach Anspruch 6, **dadurch gekennzeichnet, dass** die mit Dämpfungsmedium gefüllte erste Behälterkammer (CR1) des Behälters gegen die Umgebung durch den unteren Teil (10a) des elastischen Elements (10) abgedichtet ist.

## Revendications

1. Réservoir (1) comprenant une partie de réservoir supérieure et une partie de réservoir inférieure (1a,1b) divisées par un élément (10) en une première et deuxième chambre de réservoir (CRI, CR2), lequel réservoir est destiné à être joint à et à pressuriser un amortisseur hydraulique, comprenant pour l'essentiel un corps d'amortisseur cylindrique (2) comprenant un vérin d'amortissement (8) ayant une chambre d'amortissement intérieure (Cd) remplie d'un milieu d'amortissement, la chambre d'amortissement étant délimitée à ses deux extrémités par des éléments de fixation (3,4) et divisée par un piston principal mobile axialement (6), le réservoir (1) étant fixé à un des éléments de fixation (3,4), la partie de réservoir inférieure (1b) étant délimitée par deux surfaces de base plates à déplacement parallèle (Ab) et une paroi de réservoir en tant que surface de contact entre ces surfaces de base et ayant une extension verticale étant pour l'essentiel parallèle au corps de l'amortisseur (2), **caractérisé en ce qu'**une ou les deux surfaces de base (Ab) de la partie de réservoir inférieure (1 b) sont réniformes et sont raccordées par la paroi de réservoir de telle manière que la partie de réservoir inférieure (1 b) a une extension verticale qui suit en partie la forme cylindrique du corps d'amortisseur (2), cette partie de la paroi de réservoir de la partie inférieure (1 a) du réservoir qui fait face au corps d'amortisseur (2) ayant une surface intérieure (Ai) qui suit pour l'essentiel la forme cylindrique du corps d'amortisseur (2) et cette partie de la paroi de réservoir de la partie inférieure (1 a) du réservoir qui est opposée au corps d'amortisseur (2) étant une surface extérieure (Ay) qui est disposée à une distance radiale plus grande du corps d'amortisseur (2) que la surface intérieure (A), la surface intérieure (A) de la partie de réservoir inférieure (1a,1b) étant disposée à une distance (x) du corps d'amortisseur (2).

2. Réservoir selon la revendication 1, **caractérisé en ce que** la surface extérieure et la surface intérieure (Aj,Ay) ont une transition régulière l'une à l'autre, raccordée à un rayon (R).

3. Réservoir selon la revendication 1 ou 2, **caractérisé en ce que** la partie de réservoir supérieure (1 a) se raccorde à la partie de réservoir inférieure (1 b) et forment ensemble une unité qui, à son extrémité supérieure, est raccordée à la tête de vérin.

4. Réservoir selon la revendication 3, **caractérisé en ce que** la partie de réservoir supérieure et la partie de réservoir inférieure (1a,1b) sont produites à partir d'une seule pièce de matériau.

5. Réservoir selon la revendication 3, **caractérisé en ce que** la partie de réservoir supérieure et la partie de réservoir inférieure (1a,1b) sont produites en tant que deux unités séparables.

6. Réservoir selon l'une quelconque des revendications précédentes **caractérisé en ce que** le réservoir (1) est divisé par un élément élastique (10) en une première (CR1) et une deuxième chambre de réservoir (CR2), dans lequel la première chambre de réservoir (CRI) est hydrauliquement raccordée à une chambre d'amortissement remplie d'un milieu d'amortissement (Cd) et la deuxième chambre de réservoir (CR2) est remplie d'un gaz qui agit sur la surface intérieure de l'élément élastique (10) et pressurise la première chambre de réservoir (CRI).

7. Réservoir selon la revendication 6, **caractérisé en ce que** la section transversale inférieure de l'élément élastique (10) est formée conformément à la surface de base (Ab) de la partie de réservoir inférieure (1 b), de manière qu'elle est, également, réniforme.

8. Réservoir selon la revendication 6, **caractérisé en ce que** l'élément élastique (10) est fixé dans la partie inférieure du réservoir par un bouchon (21) fixé dans le réservoir (1).

9. Réservoir selon la revendication 6, **caractérisé en ce que** la première chambre du réservoir remplie d'un milieu d'amortissement (CRI) du réservoir est fermée hermétiquement par rapport à l'environnement par la partie inférieure (10a) de l'élément élastique (10).
